# EUROPÄISCHE PATENTSCHRIFT

(11) **EP 1 998 929 B1**
(45) Veröffentlichungstag und Bekanntmachung des Hinweises auf die Patenterteilung: **04.04.2012**
(21) Anmeldenummer: 07703516.0
(22) Anmeldetag: 16.02.2007
(51) Int. Cl.: B23K 26/12

(54) **PROZESSKAMMER UND VERFAHREN FÜR DIE BEARBEITUNG EINES WERKSTOFFS MIT EINEM GERICHTETEN STRAHL ELEKTROMAGNETISCHER STRAHLUNG, INSBESONDERE FÜR EINE LASERSINTERVORRICHTUNG**
PROCESS CHAMBER AND METHOD FOR PROCESSING A MATERIAL USING A DIRECTIONAL BEAM OF ELECTROMAGNETIC RADIATION, IN PARTICULAR FOR A LASER SINTERING DEVICE
CHAMBRE DE TRAITEMENT ET PROCÉDÉ D'USINAGE D'UN MATÉRIAU PAR UN FAISCEAU ORIENTÉ DE RAYONNEMENT ÉLECTROMAGNÉTIQUE, EN PARTICULIER POUR UN DISPOSITIF DE FRITTAGE AU LASER

(30) Priorität: 28.03.2006 DE 102006014694
(43) Veröffentlichungstag der Anmeldung: 10.12.2008
(73) Patentinhaber: EOS GmbH Electro Optical Systems, 82152 Krailling (DE)
(72) Erfinder: PERRET, Hans, 81543 München (DE); PHILIPPI, Jochen, 81377 München (DE)
(74) Vertreter: Hofer, Dorothea
(86) Internationale Anmeldenummer: PCT/EP2007/001390
(87) Internationale Veröffentlichungsnummer: WO 2007/112808

(56) Entgegenhaltungen:
- WO-A-97/06918
- WO-A-2005/072904
- DE-C1- 19 853 947
- FR-A1- 2 499 297
- JP-A- 2004 277 878
- US-A- 5 977 515

## Beschreibung

Die Erfindung betrifft eine Prozesskammer gemäß dem Oberbegriff des Anspruchs 1 und ein Verfahren gemäß dem Oberbegriff des Anspruchs 9 für die Bearbeitung eines Werkstoffs mit einem gerichteten Strahl elektromagnetischer Strahlung, insbesondere für eine Lasersintervorrichtung. Die FR-2499297A1 offenbart eine solche Prozesskammer und ein solches Verfahren.

Eine Lasersintervorrichtung umfasst in bekannter Weise einen Laser und eine Prozesskammer in der das herzustellende Objekt aufgebaut wird, sowie ein Einkoppelfenster zum Einkoppeln des Laserstrahls in die Prozesskammer.

Bei dem lokalen Auftreffen des Lasers auf das Pulvermaterial sowie beim Aufheizen des Pulvermaterials kann es zum Verdampfen von geringen Mengen des Materials kommen, wobei sich das verdampfte Material oder Bestandteile desselben oder auch chemische Reaktionsprodukte sowie in der Atmosphäre der Prozesskammer schwebende Staubpartikel an dem Einkoppelfenster niederschlagen. Dies führt zu einer Verringerung der Transparenz des Einkoppelfensters und folglich zu einer Abnahme der Intensität des Laserstrahls.

Aus der WO 97/06918 ist eine Lasersintervorrichtung bekannt, bei der auf der der Prozesskammer zugewandten Seite des Einkoppelfensters eine das Einkoppelfenster ringförmig umgebende Düse zum Einführen eines Gases zum Freiblasen des Einkoppelfensters vorgesehen ist. Der Gasstrom verläuft tangential zur Oberfläche des Einkoppelfensters.

Bei der bekannten Vorrichtung bleibt die Oberfläche des Einkoppelfensters jedoch nicht an allen Stellen sauber. Ferner können Temperaturgradienten zwischen dem Einkoppelfenster und Freiblasungsgas einerseits und dem in der Prozesskammer befindlichen Gas anderseits zu störenden Strahlablenkungen führen. Um das zweite Problem zu mildern, kann das Freiblasungsgas einseitig eingeblasen werden. Dies führt jedoch zu schnellerer Schmutzablagerung auf der Oberseite des Einkoppelfensters.

Aus der DE 198 53 947 C1 ist eine Prozesskammer für das selektive Laserschmelzen bekannt, bei der über eine erste Einlassöffnung ein Schutzgas in die Prozesskammer eingeleitet wird, so dass es über die Bearbeitungsfläche strömt, und bei der zweite Einlassöffnungen für ein ringförmig zugeführtes zweites, leichteres Gas innerhalb eines erhöhten Bereiches der Prozesskammer vorgesehen ist, im dem sich das Einkoppelfenster befindet. Dadurch bildet sich innerhalb des erhöhten Bereiches eine Art Puffervolumen des zweiten leichteren Gases, durch das in der Bearbeitungszone entstehende Dämpfe vom Einkoppelfenster abgehalten werden. Das Problem einer störenden Strahlablenkung aufgrund eines Temperaturgradienten wird dadurch jedoch nicht gelöst.

WO 97/06918 A offenbart eine gattungsgemäße Prozesskammer mit entsprechendem Verfahren zur Bearbeitung eines Werkstoffs mit einem gerichteten Strahl elektromagnetischer Strahlung. Die Prozesskammer hat ein optisches Element zum Einkoppeln des Strahls in die Prozesskammer, wobei das optische Element eine dem Inneren der Prozesskammer zugewandte Oberfläche aufweist; einen das optische Element umgebenden Wandabschnitt; und eine Einlassöffnung für ein Gas, die so ausgebildet ist, dass ein austretender erster Gasstrom im wesentlichen tangential an der Oberfläche des optischen Elements entlang streicht.

FR-2 499 297 A1 und US-5,977,515 A zeigen jeweils einen geschlossenen Laserbearbeitungskopf, der einen Laserstrahl in eine getrennte Prozesskammer einkoppelt.

Es ist Aufgabe der Erfindung eine Prozesskammer und ein Verfahren für eine Bearbeitung eines Werkstoffes mit einem gerichteten Strahl einer elektromagnetischen Strahlung, insbesondere für eine Lasersintervorrichtung bereitzustellen, bei der bzw. bei dem das Einkoppelfenster wirksam vor Verschmutzungen geschützt ist und wobei der das Problem einer Strahlablenkung aufgrund von Temperaturgradienten in der Nähe des Einkoppelfensters minimiert ist.

Die Aufgabe wird gelöst durch eine Prozesskammer nach Patentanspruch 1 und ein Verfahren nach Anspruch 9. Weiterbildungen der Erfindung sind in den Unteransprüchen angegeben.

Die Vorrichtung nach Anspruch 1 weist den Vorteil auf, dass der untere Gasstrom von dem Einkoppelfenster weg gerichtet ist. Dadurch lässt sich die Trennung von schmutzbeladenem Gas, welches von der Bearbeitungsfläche aufsteigt, von dem Einkoppelfenster verbessern. Dadurch ist eine bessere Reinhaltung der optischen Oberfläche möglich. Ferner lassen sich Strahlablenkungen auch bei Bestehen von Temperaturgradienten zwischen Freiblasungsgas und Prozesskammergas weitgehend vermeiden.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Darstellung einer Lasersintervorrichtung; und
- Fig. 2: eine perspektivische geschnittene Darstellung eines Bereichs der Prozeßkammer, der das Einkoppelfenster enthält.

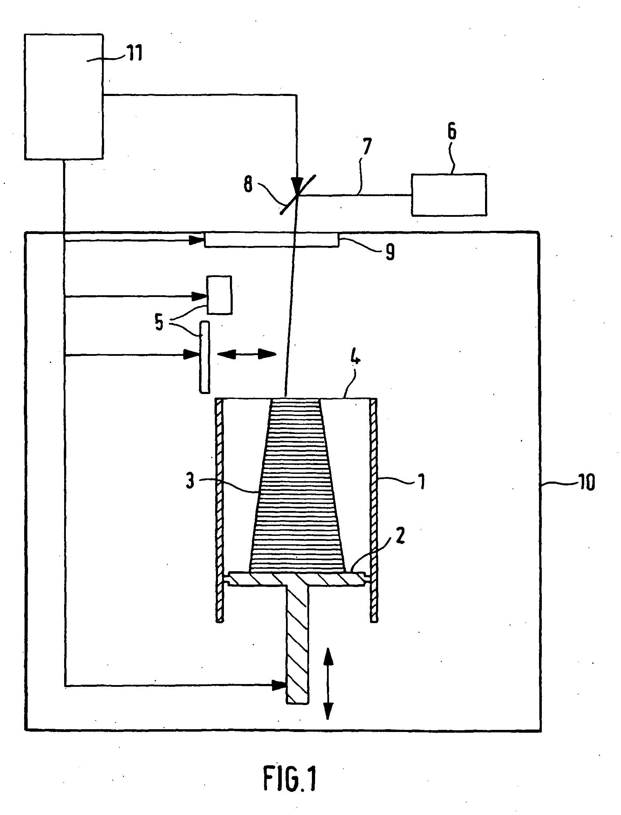

Fig. 1 zeigt eine Lasersintervorrichtung als Ausführungsbeispiel einer Vorrichtung zur schichtweisen Herstellung eines dreidimensionalen Objekts. Die Lasersintervorrichtung weist einen nach oben hin offenen Behälter 1 mit einem darin in vertikaler Richtung bewegbaren Träger 2 auf, der das zu bildende Objekt 3 trägt. Der Träger 2 wird in vertikaler Richtung so eingestellt, dass die jeweils zu verfestigende Schicht des Objekts in einer Arbeitsebene 4 liegt. Weiter ist eine Aufbringvorrichtung 5 zum Aufbringen des durch elektromagnetische Strahlung verfestigbaren pulverförmigen Aufbaumaterials vorgesehen. Die Vorrichtung weist ferner einen Laser 6 auf. Der durch den Laser 6 erzeugte Laserstrahl 7 wird durch eine Ablenkeinrichtung 8 auf ein Einkoppelfenster 9 gelenkt und von diesem in die Prozesskammer 10 hindurch gelassen und in einem vorbestimmten Punkt in der Arbeitsebene 4 fokussiert.

Das Einkoppelfenster 9 ist beispielsweise in der Deckwand der Prozesskammer 10 vorgesehen, wenn die Vorrichtung so angeordnet ist, dass der Laserstrahl von oben in die Prozesskammer eintritt und das Objekt 3 in vertikaler Richtung aufgebaut wird. Das Einkoppelfenster 9 ist aus einem für den Laserstrahl transparenten Material wie z.B. Glas oder einem transparenten Kunststoff gebildet. Die Prozesskammer 10 kann ferner einen nicht dargestellten Einlass für ein Gas zur Aufrechterhaltung einer bestimmten Atmosphäre über der Arbeitsebene halten, beispielsweise ein Einlass für ein Inertgas wie z.B. Stickstoff.

Es ist ferner eine Steuereinheit 11 vorgesehen, über die die Bestandteile der Vorrichtung in koordinierter Weise zum Durchführen des Bauprozesses gesteuert werden.

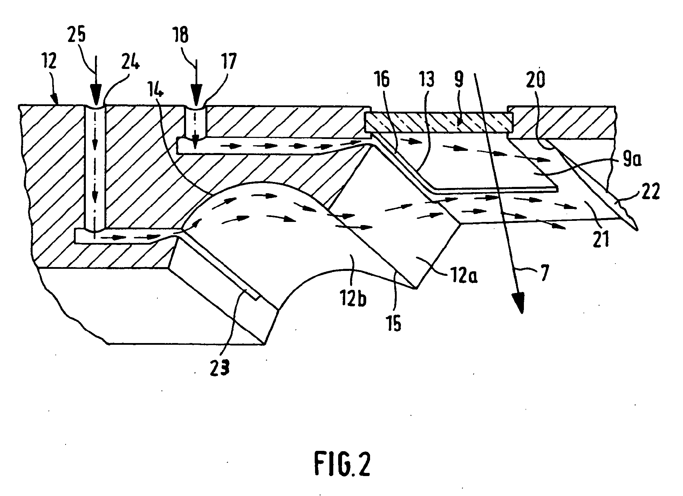

Fig. 2 zeigt einen vergrößerten Ausschnitt der Prozesskammer 10 um das Einkoppelfenster 9 herum in geschnittener perspektivischer Ansicht. Das Einkoppelfenster 9 ist im gezeigten Ausführungsbeispiel als rechteckiges Fenster ausgebildet. Es kann selbst als optisches Element wie z.B. als Linse oder als Linsensystem zum Fokussieren des Laserstrahls in die Arbeitsebene ausgebildet sein. Es kann jedoch auch als für den Laserstrahl durchlässiges Schutzfenster zum Schutz eines dahinter liegenden optischen Elements ausgebildet sein.

Das Einkoppelfenster 9 ist in einem Wandabschnitt 12 der Deckwand so befestigt, dass es die Prozesskammer in dem oberen Bereich dicht abschließt. Es weist ferner eine der Arbeitsebene 4 zugewandte Oberfläche 9a auf.

Wie aus Fig. 2 ersichtlich ist, weist der Wandabschnitt 12 angrenzend an eine Längsseite 13 des Einkoppelfensters einen ersten abgeschrägten Abschnitt 12a auf, dessen schräge Oberfläche sich unter einem Winkel vom Einkoppelfenster 9 weg erstreckt. Angrenzend an den abgeschrägten Abschnitt 12a ist ein im Wesentlichen hohlzylindrischer oder hohlzylinderabschnittsförmiger Abschnitt 12b vorgesehen, dessen Zylinderachse sich parallel zur Längsseite 13 des Einkoppelfensters erstreckt. Der Scheitelpunkt 14 des Hohlzylinderabschnitts liegt vorzugsweise höher als die Kante 15 des abgeschrägten Abschnitts 12a, sodass der zweite Wandabschnitt 12b eine hohlkehlenartige Struktur aufweist. Die Abschnitte 12a, 12b erstrecken sich im Wesentlichen über die gesamte Längsseite 13 des Einkoppelfensters, oder etwas darüber hinaus.

An dem dem Einkoppelfenster 9 zugewandten Ende des abgeschrägten Bereichs 12a des Wandabschnitts 12 ist ein erster Spalt 16 vorgesehen, der sich im Wesentlichen entlang der Längsseite 13 des Einkoppelfensters erstreckt und der mit einer ersten Einlassbohrung 17 für eine erste Gaszufuhr verbunden ist. Die Verbindung mit der ersten Gaszufuhr kann abschaltbar gestaltet sein, beispielsweise über ein Ventil. Der erste Spalt 16 weist eine Breite und eine Geometrie auf, die so bemessen ist, dass zugeführtes erstes Gas 18 im Wesentlichen tangential entlang der Oberfläche 9a des Einkoppelfensters von der einen Längsseite 13 bis zur gegenüberliegenden Längsseite 20 entlangstreicht.

Der Wandabschnitt 12 der Prozesskammer weist ferner in dem dem ersten Spalt 16 gegenüberliegenden Bereich angrenzend an die gegenüberliegende Längsseite 20 des Einkoppelfensters einen ersten im Wesentlichen horizontalen Wandbereich 21 und einen daran angrenzenden abgeschrägten Bereich 22 auf. Dadurch wird es ermöglicht, dass das durch den ersten Spalt 16 einströmende erste Gas 18 im Wesentlichen tangential die gesamte Oberfläche 9a des Einkoppelfenster überstreicht sowie anschließend durch die abgeschrägte Fläche 22 vom Einkoppelfenster weggeleitet wird.

In dem zweiten Wandabschnitt 12b ist ein zweiter Spalt 23 vorgesehen, der sich parallel zu dem ersten Spalt 16 und im Wesentlichen über die gesamte Längsseite 13 des Einkoppelfensters oder darüber hinaus erstreckt. Der zweite Spalt 23 ist mit einer zweiten Einlassbohrung 24, die mit einer Gaszufuhr für ein zweites Gas 25 verbunden ist, verbunden. Auch die zweite Gaszufuhr kann abschaltbar ausgeführt sein. Der zweite Spalt 23 ist in dem hohlzylinderabschnittförmigen Wandabschnitt 12b in einem vom Einkoppelfenster entfernten Bereich angeordnet, sodass das durch den Spalt 23 austretende Gas 25 zunächst in die durch den hohlzylinderförmigen Abschnitt gebildete Hohlkehle strömt. Der zweite Spalt 23 ist unterhalb des ersten Spalts 16 angeordnet, wenn sich das Einkoppelfenster 9 in vertikaler Richtung über der Arbeitsebene 4 befindet.

Der Winkel unter dem der schräge Wandabschnitt 12a zu dem hohlzylindrischen Abschnitt 12b verläuft ist so gewählt, dass der Strahlweg nicht beschnitten wird.

In der Prozesskammer ist ferner eine nichtdargestellte Öffnung zur Ableitung der Gasströme vorgesehen, die mit einem Absaugmechanismus verbunden sein kann.

Als erstes und zweites Gas kann Stickstoff verwendet werden. Es ist aber auch möglich je nach Anwendungsbereich andere Gase zu verwenden. Das erste und das zweite Gas können auch verschieden voneinander sein.

Die die kurzen Seiten des Einkoppelfensters begrenzenden Wandabschnitte der Prozesskammer können im Wesentlichen horizontal sein, sodass die mit Hilfe des ersten und des zweiten Spalts erzeugten Gasströmungen nicht durch Strukturen verwirbelt werden.

Optional ist eine Steuerung vorgesehen, die die Gasströme 18,25 voneinander abhängig oder unabhängig in Bezug auf die Durchflussmenge und/oder die Geschwindigkeit steuert.

Im Betrieb wird das dreidimensionale Objekt Schicht für Schicht durch Verfestigen des pulverförmigen Aufbaumaterials mit dem Laserstrahl erzeugt. Der erste Spalt 16 und der zweite Spalt 23 sind mit der Gaszufuhr verbunden, sodass Gas durch die Spalte 16,23 in die Prozesskammer einströmt. Das durch den ersten Spalt einströmende Gas 18 strömt tangential an der der Arbeitsebene zugewandten Oberfläche 9a des Einkoppelfensters 9 entlang und wird auf der gegenüberliegenden Seite abgeleitet. Dadurch kann das Gas den Zutritt zur Oberfläche 9a des Einkoppelfensters verhindern und dadurch die Oberfläche sauber halten.

Das durch den zweiten Spalt 23 einströmende zweite Gas 25 strömt aufgrund der Anordnung und Ausbildung des Spalts 23 im Wesentlichen an der Innenfläche des hohlzylinderförmigen Abschnitts 12b entlang und erhält, wenn es sich auf die Kante 15 zwischen dem ersten abgeschrägten Abschnitt 12a und dem hohlzylindrischen Abschnitt 12b zu bewegt, einen Impuls nach unten in Richtung der Arbeitsebene. Nach Passieren der Kante 15 strömt das Gas in einem Abstand von der Oberfläche im Wesentlichen parallel zur Oberfläche 9a entlang. Durch die hohlkehlenartige Ausbildung des Abschnitts 12b wird der untere Gasstrom 25 auf Distanz zur Oberfläche des Einkoppelfensters gehalten. Dadurch werden zwei im wesentlichen laminare Ströme erhalten, die sich kaum miteinander vermischen. Im Ergebnis lässt sich die Trennung von schmutzbeladenem Gas verbessern, indem das von der Arbeitsebene aufsteigende Gas, das Kondensate und/oder Staubpartikel oder andere Verunreinigungen enthält, von den Gasströmen abgehalten wird, an das optische Element vorzudringen. Ferner ist eine Strahlablenkung aufgrund eines Temperaturgradienten durch den unteren Gasstrom 25 deutlich reduziert. Damit wird sowohl die Oberfläche 9a ausreichend sauber gehalten, als auch die Strahlablenkung minimiert.

Abwandlungen der Vorrichtung sind möglich. Das Einkoppelfenster muss nicht notwendigerweise rechteckig ausgebildet sein, sondern kann beispielsweise auch quadratisch, kreisförmig oder oval sein oder eine andere Form aufweisen. Die Wirkung ist jedoch verbessert, wenn die Spalte für die Gaszufuhr und die entsprechenden Seiten des Einkoppelfensters im Wesentlichen parallel verlaufen. Der erste Spalt 16 und der zweite Spalt 23 sind vorzugsweise etwas breiter als die Längsseite des Einkoppelfensters. Jedoch können sie auch kürzer sein, wobei dann jedoch das Einkoppelfenster an den Rändern nicht ausreichend von Gas überstrichen wird.

Die Formen der Wandabschnitte 12a und 12b können auch anders ausgebildet sein. Die abgeschrägte Fläche 12a kann zum Beispiel auch in die Prozesskammer hinein gewölbt sein. Die hohlkehlenartige Fläche 12b muss nicht unbedingt eine Zylinderabschnittsform haben, sondern es kann jede andere Form verwendet werden, die eine Hohlkehle für das Entlangströmen des Gases bildet.

Es ist auch denkbar, auf den hohlkehlenartigen Wandabschnitt 12b zu verzichten und statt dessen den zweiten Spalt 23 so auszubilden, dass das austretende Gas einen Impuls vom Einkoppelfenster weg gerichtet erhält.

Die Erfindung ist auch anwendbar auf andere Vorrichtungen zur schichtweisen Herstellung von dreidimensionalen Objekten, beispielsweise auf eine Laserschmelzvorrichtung, bei der das pulverförmige, zumeist metallische, Aufbaumaterial durch den Laser verschmolzen wird, sowie auf andere Bearbeitungsvorrichtungen, bei denen in einer Prozesskammer Gase oder Dämpfe auftreten, die ein Einkoppelfenster verschmutzen können.

## Patentansprüche

1. Prozesskammer für eine Bearbeitung eines Werkstoffs mit einem gerichteten Strahl elektromagnetischer Strahlung mit einem Einkoppelfenster (9) zum Einkoppeln des Strahls (7) in die Prozesskammer (10), in der sich eine Arbeitsebene befindet wobei
- das optische Element eine der Arbeitsebene zugewandte Oberfläche (9a) aufweist und das Einkoppelfenster (9) von einem Wandabschnitt (12) der Prozesskammer umgeben ist,
- eine erste Gaszufuhröffnung (16) für ein Gas vorgesehen ist, die sich im wesentlichen entlang an einer Längsseite des Einkoppelfensters (9) erstreckt und so ausgebildet ist, dass ein einströmender erster Gasstrom (18) an der zur Arbeitsebene zugewandten Oberfläche (9a) des Einkoppelfensters (9) entlang streicht,
**dadurch gekennzeichnet, dass**
- der aus der ersten Gaszufuhröffnung einströmende Gasstrom (18) im Wesentlichen tangential an der zur Arbeitsebene zugewandten Oberfläche (9a) des Einkoppelfensters (9) entlang von der einen Längsseite des optischen Elements bis zur gegenüberliegenden Längsseite entlangstreicht,
- eine zweite Gaszufuhröffnung (23) für ein Gas vorgesehen ist, die so ausgebildet und angeordnet ist, dass ein einströmender zweiter Gasstrom (25) in einem Abstand zu der, der Arbeitsebene zugewandten Oberfläche (9a) in der im wesentlichen selben Richtung wie der erste Gasstrom (18) fließt und
- die zweite Gaszufuhröffnung unterhalb der ersten Gaszufuhröffnung (16) angeordnet ist.

2. Prozesskammer nach Anspruch 1, **dadurch gekennzeichnet,**
**dass** der erste Gasstrom (18) und der zweite Gasstrom (25) im Wesentlichen laminar ausgebildet sind.

3. Prozesskammer nach Anspruch 1 oder 2, wobei die eine oder beide Gaszufuhröffnungen(16, 23) spaltförmig ausgebildet sind.

4. Prozesskammer nach einem der Ansprüche 1 bis 3,
**dadurch gekennzeichnet, dass**
die Wand (12) der Prozesskammer (10) einen Strukturabschnitt (12b) aufweist, der so ausgebildet und
angeordnet ist, dass das durch die zweite Gaszufuhröffnung (23) einströmende Gas einen Impuls erhält, der von der Oberfläche (9a) weggerichtet ist.

5. Prozesskammer nach Anspruch 4, **dadurch gekennzeichnet, dass** der Wandabschnitt (12b) eine hohlkehlartige Form aufweist,

6. Prozesskammer nach Anspruch 4 oder 5,
**dadurch gekennzeichnet, dass**
die zweite Gaszufuhröffnung in Betriebstellung unterhalb der ersten Gaszufuhröffnung angeordnet ist.

7. Prozesskammer nach einem der Ansprüche 1 bis 6,
**dadurch gekennzeichnet, dass**
der gerichtete Strahl in Laserstrahl ist.

8. Lasersintervorrichtung mit einem Laser (6) und einer Prozesskammer (10) nach einem der Ansprüche 1 bis 7.

9. Verfahren zur Bearbeitung eines Werkstoffs mit einem gerichteten Strahl elektromagnetischer Strahlung mit den Schritten:
- Lenken eines gerichteten Strahls (7) elektromagnetischer Strahlung durch ein Einkoppelfenster (9) in eine Prozesskammer (10), wobei das Einkoppelfenster eine zur Arbeitsebene zugewandte Oberfläche (9a) aufweist;
- Zuführen; eines ersten Gasstromes1 (18) derart in die Prozesskammer, dass der erste Gasstrom von einer Seite kommend an der zur Arbeitsebene zugewandten Oberfläche des Einkoppelfensters (9a) entlang streicht,
**gekennzeichnet durch**
- einen Schritt zum Zuführen des ersten Gasstroms (25) derart in die Prozesskammer, dass der erste Gasstrom im Wesentlichen tangential der zur Arbeitsebene zugewandten Oberfläche des Einkoppelfensters (9a) von der einen Längsseite bis zur gegenüberliegenden Längsseite entlang streicht,
- einen Schritt zum Zuführen eines zweiten Gasstroms (25) derart in die Prozesskammer, dass der zweite Gasstrom in einem Abstand zu der zur Arbeitsebene zugewandten Oberfläche des Einkoppelfensters (9a) in der im wesentlichen selben Richtung wie der erste Gasstrom (18) fließt.

10. Verfahren nach Anspruch 9, **gekennzeichnet durch** einen Schritt des Bearbeitens des Werkstoffs mit dem Laserstrahl in der Prozesskammer.

11. Verfahren nach Anspruch 9 oder 10, bei dem eine Prozesskammer nach einem der Ansprüche 1 bis 8 verwendet wird.

12. Verfahren nach einem der Ansprüche 9 bis 11, bei dem es sich um das Lasersinterverfahren handelt.

## Claims

1. Process chamber for processing a material with a directed beam of electromagnetic radiation, having a coupling-in window (9) for coupling the beam (7) into the process chamber (10), in which a working plane is located, wherein
- the optical element has a surface (9a), which faces the working plane, and the coupling-in window (9) is surrounded by a wall section (12) of the process chamber,
- a first gas feed opening (16) for a gas is provided, which extends substantially along a longitudinal side of the coupling-in window (9) and is configured such that an inflowing first gas flow (18) sweeps along the surface (9a) of the coupling-in window (9) that faces the working plane,
**characterized in that**
- the gas flow (18) flowing in from the first gas feed opening sweeps substantially tangentially along the surface (9a) of the coupling-in window (9) that faces the working plane from one longitudinal side of the optical element to the opposite longitudinal side,
- a second gas feed opening (23) for a gas is provided, which is configured and arranged such that an inflowing second gas flow (25) flows in the substantially same direction as the first gas flow (18) at a distance from the surface (9a) that faces the working plane and
- the second gas feed opening is arranged below the first gas feed opening (16).

2. Process chamber according to Claim 1, **characterized in that** the first gas flow (18) and the second gas flow (25) are configured to be substantially laminar.

3. Process chamber according to Claim 1 or 2, wherein one or both gas feed openings (16, 23) are configured in the shape of a slit.

4. Process chamber according to one of Claims 1 to 3, **characterized in that** the wall (12) of the process chamber (10) has a structure section (12b), which is configured and arranged such that gas flowing in through the second gas feed opening (23) obtains an impulse which is directed away from the surface (9a).

5. Process chamber according to Claim 4, **characterized in that** the wall section (12b) has a shape like a fillet.

6. Process chamber according to Claim 4 or 5, **characterized in that** the second gas feed opening in the operating position is arranged below the first gas feed opening.

7. Process chamber according to one of Claims 1 to 6, **characterized in that** the directed beam is a laser beam.

8. Laser sintering apparatus having a laser (6) and a process chamber (10) according to one of Claims 1 to 7.

9. Method for processing a material with a directed beam of electromagnetic radiation, having the steps of:
- steering a directed beam (7) of electromagnetic radiation through a coupling-in window (9) into a process chamber (10), wherein the coupling-in window has a surface (9a) that faces the working plane;
- feeding a first gas flow (18) into the process chamber such that the first gas flow, coming from one side, sweeps along that surface (9a) of the coupling-in window that faces the working plane, **characterized by**
- a step for feeding the first gas flow (25) into the process chamber such that the first gas flow sweeps substantially tangentially to the surface of the coupling-in window (9a) that faces the working plane from one longitudinal side to the opposite longitudinal side,
- a step for feeding a second gas flow (25) into the process chamber such that the second gas flow flows in the substantially same direction as the first gas flow (18) at a distance from the surface (9a) of the coupling-in window that faces the working plane.

10. Method according to Claim 9, **characterized by** a step of processing the material with the laser beam in the process chamber.

11. Method according to Claim 9 or 10, in which a process chamber according to one of Claims 1 to 8 is used.

12. Method according to one of Claims 9 to 11, in which the method is the laser sintering method.

## Revendications

1. Chambre de traitement pour le traitement d'un matériau à l'aide d'un faisceau orienté d'un rayonnement électromagnétique,
la chambre étant dotée d'une fenêtre d'injection (9) qui permet d'injecter le faisceau (7) dans la chambre de traitement (10) dans laquelle est situé un plan de travail,
l'élément optique présentant une surface (9a) tournée vers le plan de travail et la fenêtre d'injection (9) étant entourée par une partie (12) de la paroi de la chambre de traitement,
une première ouverture (16) d'amenée de gaz qui s'étend essentiellement le long d'un côté longitudinal de la fenêtre d'injection (9) et qui est configurée de telle sorte qu'un premier écoulement de gaz (18) entrant balaie la surface (9a), tournée vers le plan de travail, de la fenêtre d'injection (9), étant prévue pour un gaz,
**caractérisée en ce que**
- l'écoulement de gaz (18) qui pénètre par la première ouverture d'amenée de gaz balaie de manière essentiellement tangentielle la surface (9a), tournée vers le plan de travail, de la fenêtre d'injection (9) d'un côté longitudinal de l'élément optique jusqu'à son côté longitudinal opposé,
- **en ce qu'**une deuxième ouverture (23) d'amenée de gaz est prévue pour un gaz et est configurée et disposée de telle sorte qu'un deuxième écoulement de gaz (25) entrant s'écoule essentiellement dans la même direction que le premier écoulement de gaz (18) à distance de la surface (9a) tournée vers le plan de travail et
- **en ce que** la deuxième ouverture d'amenée de gaz est disposée en dessous de la première ouverture (16) d'amenée de gaz.

2. Chambre de traitement selon la revendication 1, **caractérisée en ce que** le premier écoulement de gaz (18) et le deuxième écoulement de gaz (25) sont essentiellement laminaires.

3. Chambre de traitement selon les revendications 1 ou 2, dans laquelle la ou les deux ouvertures (16, 23) d'amenée de gaz sont réalisées en forme de fente.

4. Chambre de traitement selon l'une des revendications 1 à 3, **caractérisée en ce que** la paroi (12) de la chambre de traitement (10) présente une partie structurée (12b) configurée et disposée de telle sorte que le gaz qui pénètre par la deuxième ouverture (23) d'amenée de gaz reçoive une impulsion qui l'éloigne de la surface (9a).

5. Chambre de traitement selon la revendication 4, **caractérisée en ce que** la partie de paroi (12b) présente la forme d'une gorge creuse.

6. Chambre de traitement selon les revendications 4 ou 5, **caractérisée en ce qu'**en position d'utilisation, la deuxième ouverture d'amenée de gaz est disposée en dessous de la première ouverture d'amenée de gaz.

7. Chambre de traitement selon l'une des revendications 1 à 6, **caractérisée en ce que** le faisceau orienté est un faisceau laser.

8. Dispositif de frittage par laser doté d'un laser (6) et d'une chambre de traitement (10) selon l'une des revendications 1 à 7.

9. Procédé de traitement d'un matériau à l'aide d'un faisceau orienté de rayonnement électromagnétique, le procédé comportant les étapes qui consistent à :
- conduire dans une chambre de traitement (10) un faisceau orienté (7) de rayonnement électromagnétique à travers une fenêtre d'injection (9), la fenêtre d'injection présentant une surface (9a) tournée vers le plan de travail,
- apporter un premier écoulement de gaz (18) dans la chambre de traitement de telle sorte que le premier écoulement de gaz entrant par un côté balaie la surface, tournée vers le plan de travail, de la fenêtre d'injection (9a),
**caractérisé par**
- une étape d'amenée du premier écoulement de gaz (25) dans la chambre de traitement de telle sorte que le premier écoulement de gaz balaie essentiellement tangentiellement d'un côté longitudinal au côté longitudinal opposé la surface (9a), tournée vers le plan de travail, de la fenêtre d'injection,
- une étape d'amenée d'un deuxième écoulement de gaz (25) dans la chambre de traitement de telle sorte que le deuxième écoulement de gaz s'écoule essentiellement dans la même direction que le premier écoulement de gaz (18) à distance de la surface, tournée vers le plan de travail, de la fenêtre d'injection (9a).

10. Procédé selon la revendication 9, **caractérisé par** une étape de traitement du matériau par le faisceau laser dans la chambre de traitement.

11. Procédé selon les revendications 9 ou 10, qui utilise une chambre de traitement selon l'une des revendications 1 à 8.

12. Procédé selon l'une des revendications 9 à 11, qui est un procédé de frittage au laser.
